# EUROPÄISCHE PATENTSCHRIFT

(11) **EP 4 692 573 B1**
(45) Veröffentlichungstag und Bekanntmachung des Hinweises auf die Patenterteilung: **07.10.2026**
(21) Anmeldenummer: 24192804.3
(22) Anmeldetag: 05.08.2024
(51) Int. Cl.: F16B 21/07, F16B 21/08

(54) **WEIBLICHES KUPPLUNGSELEMENT EINER ZWEITEILIGEN STECKKUPPLUNG SOWIE EINE ZWEITEILIGE STECKKUPPLUNG, EIN BAUTEIL, EINE BAUTEILSTRUKTUR UND EIN VERBINDUNGSVERFAHREN MIT DEM WEIBLICHEN KUPPLUNGSELEMENT**
FEMALE COUPLING ELEMENT OF A TWO-PART PLUG-IN COUPLING AND A TWO-PART PLUG-IN COUPLING, A COMPONENT, A COMPONENT STRUCTURE AND A CONNECTION METHOD WITH THE FEMALE COUPLING ELEMENT
ÉLÉMENT FEMELLE DE COUPLAGE D'UN RACCORD ENFICHABLE EN DEUX PARTIES AINSI QUE RACCORD ENFICHABLE EN DEUX PARTIES, COMPOSANT, STRUCTURE DE COMPOSANT ET PROCÉDÉ DE RACCORDEMENT AU MOYEN DE L'ÉLÉMENT FEMELLE

(43) Veröffentlichungstag der Anmeldung: 11.02.2026
(73) Patentinhaber: Böllhoff Verbindungstechnik GmbH, 33649 Bielefeld (DE)
(72) Erfinder: VORDERWISCH, Alexander, 33613 Bielefeld (DE); STEFFENFAUSEWEH, Sandra, 33415 Verl (DE); SCHLÜTER, Siegmund, 33813 Oerlinghausen (DE); STRICKER, Patrick, 33619 Bielefeld (DE)
(74) Vertreter: HWP Intellectual Property

(56) Entgegenhaltungen:
- EP-A1- 4 397 871
- DE-U1- 20 108 408
- US-A1- 2007 031 185

## Beschreibung

### 1. Gebiet der Erfindung

Die vorliegende Erfindung betrifft ein weibliches Kupplungselement einer zweiteiligen Steckkupplung zum lösbaren Verbinden eines ersten Bauteils mit polygonaler Bauteilöffnung und eines zweiten Bauteils, eine zweiteilige Steckkupplung mit dem weiblichen Kupplungselement, ein erstes Bauteil mit einer polygonalen Bauteilöffnung und dem weiblichen Kupplungselement, eine Bauteilstruktur bestehend aus dem ersten Bauteil mit einer polygonalen Bauteilöffnung und dem weiblichen Kupplungselement sowie einem zweiten Bauteil und ein Verbindungsverfahren.

### 2. Hintergrund der Erfindung

Aus dem Stand der Technik ist eine Vielzahl an Steckkupplungen mit Schnappverbindung zwischen einem kugelförmigen Kopf und einer kugelförmigen Pfanne bekannt. Der Bestandteil mit der kugelförmigen Pfanne stellt ein weibliches Kupplungselement dar, während der Bestandteil mit dem kugelförmigen Kopf oder Kugelkopf ein männliches Kupplungselement darstellt. Über die lösbare Verbindung zwischen weiblichem und männlichem Kupplungselement können zwei Bauteile lösbar miteinander verbunden werden.

Dazu weist ein erstes Bauteil eine üblicherweise runde Bauteilöffnung auf. In diese wird das weibliche Kupplungselement eingesetzt. Um das weibliche Kupplungselement in der runden Bauteilöffnung zu befestigen, weist das weibliche Kupplungselement einen umlaufenden Flansch sowie Vorsprünge an seiner Außenseite auf. Die Vorsprünge werden beim Einsetzen des weiblichen Kupplungselements in die Bauteilöffnung radial einwärts gedrückt und federn nach dem Passieren der Bauteilöffnung radial nach außen. In diesem Zustand ist das weibliche Kupplungselement fertig montiert. Dies bedeutet, dass das weibliche Kupplungselement nun bereits den Kräften standhalten kann, denen später die Verbindung über die Steckkupplung standhalten muss. Aus diesem Grund ist zum Einsetzen des weiblichen Kupplungselements ein Werkzeug erforderlich, um die Kräfte aufzubringen, die zum Einsetzen eines solchen weiblichen Kupplungselements in die Bauteilöffnung erforderlich sind.

Ein Beispiel für eine solche Steckkupplung findet sich in DE 201 07 949 U1. Die Steckkupplung zum lösbaren Verbinden eines ersten Bauteils mit einem zweiten Bauteil umfasst einen elastisch verformbaren pfannenartigen Kupplungsteil mit einem an dem ersten Bauteil festgelegten Befestigungsabschnitt und einer daran angeformten Kugelpfanne. Weiterhin umfasst die Steckkupplung einen elastisch verformbaren kugelartigen Kupplungsteil mit einem an dem zweiten Bauteil festgelegten Befestigungsabschnitt, einem in der Kugelpfanne einschnappbaren Kugelkopf und einem zwischen dem Befestigungsabschnitt und dem Kugelkopf liegenden Zwischenabschnitt. Die Kugelpfanne des pfannenartigen Kupplungsteils ist an ihrer Außenseite mit mehreren in Umfangsrichtung verteilten Ausnehmungen versehen.

Eine Kugelschale mit einem Grundkörper ist in DE 10 2016 216 022 A1 beschrieben. Der Grundkörper weist eine Ausnehmung zur Aufnahme eines, insbesondere kugelförmigen, Gelenkkopfes auf. Die Ausnehmung ist so ausgebildet, dass sie den Gelenkkopf nach Einführen in die Ausnehmung zumindest teilweise umschließt. Weiterhin weist die Kugelschale mindestens ein Rastelement auf.

Ein weiteres Beispiel eines weiblichen Kupplungselements ist in EP 4397871 A1 offenbart.

Ein Nachteil dieser bekannten Anordnungen ist, dass eine Montage des weiblichen Kupplungselements in der Bauteilöffnung aufgrund der aufzubringenden Kräfte nur mit einem Werkzeug möglich ist. Zudem ist es nachteilig, dass die Steckkupplungen auf runde Bauteilöffnungen angepasst sind. Denn hierdurch sind diese nicht oder nur schlecht in Verbindung mit einer polygonalen Bauteilöffnung verwendbar.

Die Aufgabe der vorliegenden Erfindung ist daher, eine Steckkupplung zu schaffen, bei der das weibliche Kupplungselement mit im Vergleich zum Stand der Technik verringerten Einsetzkräften in eine polygonale Bauteilöffnung im ersten Bauteil einsetzbar ist, wobei sie bei Verwendung die von den bekannten Steckkupplungen bereitgestellten Kräfte bei der Verbindung von zwei Bauteilen realisiert.

### 3. Zusammenfassung der Erfindung

Die obige Aufgabe wird gelöst durch ein weibliches Kupplungselement einer zweiteiligen Steckkupplung zum lösbaren Verbinden eines ersten Bauteils mit polygonaler Bauteilöffnung und eines zweiten Bauteils gemäß dem unabhängigen Patentanspruch 1, eine zweiteilige Steckkupplung mit dem weiblichen Kupplungselement gemäß Patentanspruch 8, ein erstes Bauteil mit einer polygonalen Bauteilöffnung und dem weiblichen Kupplungselement gemäß Patentanspruch 11, eine Bauteilstruktur bestehend aus dem ersten Bauteil mit einer polygonalen Bauteilöffnung und dem weiblichen Kupplungselement sowie einem zweiten Bauteil gemäß Patentanspruch 13 und ein Verbindungsverfahren gemäß Patentanspruch 15. Vorteilhafte Ausführungsformen und Weiterentwicklungen ergeben sich aus der nachfolgenden Beschreibung, den Zeichnungen sowie den anhängigen Patentansprüchen.

Ein erfindungsgemäßes weibliches Kupplungselement einer zweiteiligen Steckkupplung zum lösbaren Verbinden eines ersten Bauteils mit polygonaler Bauteilöffnung und eines zweiten Bauteils umfasst die folgenden Merkmale: eine in umfänglicher Richtung verlaufende polygonale äußere flanschartige Anlagestruktur an einem offenen ersten axialen Ende sowie eine domartige Haltestruktur mit einer polygonalen Außenseite, die in Umfangsrichtung mehrere auswärts gerichteten erste Vorsprünge und Ausnehmungen aufweist, die wechselweise angeordnet sind, wobei die Haltestruktur von der Anlagestruktur axial durch eine in einer Längsrichtung des Kupplungselements und umfänglich verlaufende Wand beabstandet ist, sowie im Inneren des weiblichen Kupplungselements benachbart zum offenen ersten axialen Ende mehrere in Umfangsrichtung angeordnete einwärts gerichtete zweite Vorsprünge und Ausnehmungen, die wechselweise angeordnet sind, wobei die zweiten Vorsprünge bezogen auf eine zentrale Längsachse des weiblichen Kupplungselements zu den ersten Vorsprüngen ausgerichtet sind und die zweiten Vorsprünge eine solche axiale Erstreckung aufweisen, dass die Wand im Bereich der zweiten Vorsprünge dicker im Vergleich zu dem Bereich an den zweiten Ausnehmungen ist, so dass bei einem Einsetzen des weiblichen Kupplungselements in die polygonale Bauteilöffnung ein Material des weiblichen Kupplungselements im Bereich der ersten und der zweiten Ausnehmungen in umfänglicher Richtung elastisch komprimierbar ist, wodurch eine axiale Einsetzkraft zur Vormontage des weiblichen Kupplungselements in der polygonalen Bauteilöffnung des ersten Bauteils reduziert ist, und bei einem Einsetzen eines männlichen Kupplungselements mit einem Schaft und einem Kugelkopf der Schaft des männlichen Kupplungselements eine radial nach außen gerichtete Verformungsbewegung des weiblichen Kupplungselements im Bereich der zueinander ausgerichteten ersten und der zweiten Vorsprünge bewirkt.

Nachfolgend wird das erfindungsgemäße weibliche Kupplungselement im Rahmen seiner Verwendung zur besseren Nachvollziehbarkeit der Funktionsweise erläutert. In diesem Zusammenhang ist es bevorzugt, dass das weibliche Kupplungselement aus einem der folgenden Materialien oder einer Kombination davon gebildet ist: Polypropylen, Silikon und/oder EPDM. Durch die geeignete Materialwahl kann das weibliche Kupplungselement auf den jeweiligen Anwendungsfall angepasst werden.

Mit dem weiblichen Kupplungselement soll eine lösbare Verbindung eines ersten Bauteils mit der polygonalen Bauteilöffnung und einem zweiten Bauteil realisiert werden. Hierzu ist neben dem ersten und dem zweiten Bauteil ein männliches Kupplungselement mit einem Schaft und einem Kugelkopf erforderlich, die über eine dazwischen angeordnete Verjüngung getrennt sind. Das männliche Kupplungselement kann integral an dem zweiten Bauteil ausgebildet sein oder mit diesem verbunden sein.

In einem ersten Schritt wird das weibliche Kupplungselement in die polygonale Bauteilöffnung des ersten Bauteils eingeführt. Beispielhaft handelt es sich bei der polygonalen Bauteilöffnung um eine rechteckige Öffnung mit abgerundeten Ecken. Eine Diagonale d_{B} der Bauteilöffnung beträgt beispielhaft 20 mm. Wie später erläutert wird, liegt eine Außendiagonale D_{W} der Wand in diesem Fall zwischen 18,0 mm und 18,3 mm. Aufgrund dieser Dimensionierung ist zumindest im Bereich der abgerundeten Ecken ein Spalt b zwischen der Bauteilöffnung und der Wand des weiblichen Kupplungselements vorhanden. Wenn die ersten Vorsprünge beispielhaft ebenfalls im Bereich der abgerundeten Ecken vorgesehen sind, erstrecken sich diese jedoch über die Bauteilöffnung hinaus, was später anhand beispielhafter Dimensionierungen erläutert wird.

Aufgrund der Formgestaltung und insbesondere der Ausrichtung der ersten und der zweiten Vorsprünge und somit auch der ersten und der zweiten Ausnehmungen zueinander, ist es möglich, das weibliche Kupplungselement ohne Verwendung eines Werkzeugs in die Bauteilöffnung einzusetzen. Denn durch die in axialer Richtung miteinander und somit zueinander ausgerichteten ersten und zweiten Ausnehmungen, d.h. den Ausnehmungen auf der Innen- und auf der Außenseite, kann das weibliche Kupplungselement an diesen Stellen elastisch komprimiert werden. Hierdurch wird das Einsetzen des weiblichen Kupplungselements in die polygonale Bauteilöffnung des ersten Bauteils erleichtert.

Sobald das erste Bauteil bzw. die ersten Vorsprünge die polygonale Bauteilöffnung passiert haben, erstrecken diese sich elastisch nach außen. Ein Abstand zwischen der Wand des weiblichen Kupplungselements und einer Innenwand der Bauteilöffnung ist dabei so bemessen, dass zumindest teilweise ein radiales Spiel oder ein Spalt vorhanden ist, wie oben anhand der beispielhaften Dimensionierung aufgezeigt wurde. Dieses radiale Spiel bzw. dieser Spalt ist insbesondere in den Bereichen mit den Vorsprüngen vorhanden, sollte das Bauteil bereits in den Bereichen mit den Ausnehmungen auf der Außenseite, d. h. mit den ersten Ausnehmungen, anliegen. In diesem Zusammenhang ist es bevorzugt, dass die Wand umlaufend geschlossen ausgebildet ist.

Auf diese Weise ist das weibliche Kupplungselement somit in dem ersten Bauteil vormontiert. Der Begriff "vormontiert" zeigt dabei an, dass das weibliche Kupplungselement noch nicht final befestigt ist. Vielmehr ist es lediglich so in der Bauteilöffnung angeordnet, dass im Wesentlichen eine Verlierersicherung für das weibliche Kupplungselement im ersten Bauteil bereitgestellt ist. In diesem Zustand liegt die parallel zur zentralen Längsachse verlaufende Wand des weiblichen Kupplungselements vorzugsweise nur in den Abschnitten ohne erste Vorsprünge, d.h. im Beriech der ersten Ausnehmungen, und nicht im Bereich der ersten Vorsprünge an der Bauteilöffnung an.

Eine sichere Befestigung des weiblichen Kupplungselements im ersten Bauteil und damit eine ordnungsgemäß funktionierende Steckkupplung, d.h. eine lösbare Verbindung zwischen den Bauteilen, wird erst durch das Einführen des männlichen Kupplungselements in das weibliche Kupplungselement realisiert. Hierzu weist das weibliche Kupplungselement insbesondere eine kugelpfannenartige Aufnahme benachbart zum zweiten axialen Ende auf. In diesem Zusammenhang ist es besonders bevorzugt, dass in Richtung des ersten axialen Endes angrenzend an die kugelpfannenartige Aufnahme ein umfänglich verlaufender nach innen ragender Vorsprung vorhanden ist, der vorzugsweise vollständig umlaufend ausgebildet ist.

Das entsprechende männliche Kupplungselement ist so gestaltet, dass der Schaft des männlichen Kupplungselements einen Außendurchmesser D_{S} aufweist, der mindestens dem Außendurchmesser D_{K} des Kugelkopfs entspricht. Beispielhaft beträgt der Wert für beide Außendurchmesser 10 mm. Dementsprechend weist die kugelpfannenartige Aufnahme ebenfalls einen Durchmesser von 10 mm auf. Der umlaufend ausgebildete nach innen ragende Vorsprung wirkt im eingesetzten Zustand des männlichen Kupplungselements mit der Verjüngung des männlichen Kupplungselements zusammen.

Damit der Schaft des männlichen Kupplungselements beim Einführen in das weibliche Kupplungselement eine radial nach außen gerichtete Bewegung des weiblichen Kupplungselements im Bereich der zweiten Vorsprünge auf der Innenseite des weiblichen Kupplungselements bewirkt, ragen die zweiten Vorsprünge entsprechend weit nach innen. Die entsprechenden Dimensionierungen, gerade im Hinblick auf einen Innendiagonale d_{I} im Bereich der zweiten Vorsprünge, werden ebenfalls später diskutiert.

Da die zweiten Vorsprünge auf der Innenseite mit den ersten Vorsprüngen auf der Außenseite ausgerichtet sind, wird das weibliche Kupplungselement in diesem Bereich radial nach außen gedrückt. Dadurch werden die ersten Vorsprünge auf der Außenseite radial nach außen bewegt, was eine ordnungsgemäße Befestigung des weiblichen Kupplungselements im ersten Bauteil im Rahmen der lösbaren Steckverbindung bereitstellt.

Somit sind die Kräfte zum Entfernen des weiblichen Kupplungselements aus der Bauteilöffnung im ersten Bauteil mit eingesetztem männlichen Kupplungselement größer im Vergleich zu der Anordnung ohne männliches Kupplungselement, d.h. im Vergleich zum vormontierten Zustand. Zudem liegt in diesem Zustand die parallel zur zentralen Längsachse verlaufende Wand des weiblichen Kupplungselements vorzugsweise vollständig an der Bauteilöffnung an, d.h. auch in dem Bereich der ersten Vorsprünge.

Vorzugsweise ist es aufgrund der besonderen Gestaltung des weiblichen Kupplungselements möglich, dieses mit einer Kraft von ≤ 50 N in das erste Bauteil einzubringen, wobei das weibliche Kupplungselement aus einem Material besteht, dass eine Shore A-Härte bei Raumtemperatur von unter 70 aufweist. Bezüglich der Ermittlung der Shore-A-Härte wird auf DIN ISO 7619-1 sowie DIN EN ISO 868 verwiesen.

Wie eingangs erläutert ermöglichen die vorgesehenen ersten und zweiten Ausnehmungen ein Komprimieren, beispielsweise in Form eines Zusammenfaltens, des weiblichen Kupplungselements bei der Montage. Anders ausgedrückt handelt es sich bei den ersten und zweiten Ausnehmungen um Dünnstellen im Material des weiblichen Kopplungselements. Gerade durch diese Ausnehmungen und das Komprimieren des weiblichen Kupplungselements sind die durch die ersten Vorsprünge auf der Außenseite geschaffenen Hinterschnitte, die bei anderen Kupplungen mit Kraft durch die Aufnahme gedrückt werden müssen, kleiner und vorzugsweise innerhalb der polygonalen Bauteilöffnung. Somit werden geringere Montagekräfte beim Montieren des weiblichen Kupplungselements in dem ersten Bauteil erzeugt.

Damit das weibliche Kupplungselement aufgrund der kleineren Hinterschnitte jedoch nicht aus der polygonalen Bauteilöffnung heraus ausgedrückt werden kann, wird es mit einem entsprechenden darauf ausgelegten männlichen Kupplungselement verwendet. Dies wurde oben bereits beschrieben.

Die resultierenden Montage und Demontagekräfte des männlichen Kupplungselements in und aus dem weiblichen Kupplungselement liegen im Bereich der aus dem Stand-der-Technik bekannten Steckkupplungen. Allerdings ist das Zusammenwirken zwischen männlichem und weiblichem Kupplungselement dahingehend anders, dass das männliche Kupplungselement das weibliche Kupplungselement im Rahmen der erfindungsgemäßen Steckkupplung spreizt und sichert, anstatt dass das weibliche Kupplungselement mittels Klemmung im ersten Bauteil befestigt wird und das männliche Kupplungselement keinen Einfluss auf die Sicherung des weiblichen Kupplungselements in der Bauteilöffnung hat, sondern beispielsweise im Schaftbereich radiales Spiel zum weiblichen Kupplungselement aufweist, wie dies bei den aus dem Stand-der-Technik bekannten Anordnungen der Fall ist.

Vorteilhaft ist somit, dass das erfindungsgemäße weibliche Kupplungselement in Kombination mit einer polygonalen Bauteilöffnung anstelle einer zylindrischen Bauteilöffnung verwendbar ist und die Kräfte zum Vormontieren des weiblichen Kupplungselements niedriger im Vergleich zu den bekannten weiblichen Kupplungselementen ausfallen. Dennoch werden die für die bekannten Steckkupplungen erforderlichen Haltekräfte bei Verwendung mit dem entsprechenden männlichen Kupplungselement erzielt.

In einer bevorzugten Ausführungsform des weiblichen Kupplungselements weist die Anlagestruktur und/oder die Haltestruktur drei, vier, fünf oder sechs Ecken auf, die insbesondere abgerundet sind. Durch die Ausgestaltung der Haltestruktur analog zu der polygonalen Bauteilöffnung kann das weibliche Kupplungselement in der Bauteilöffnung vororientiert werden. Die Ausgestaltung der Anlagestruktur analog zu der polygonalen Bauteilöffnung ermöglicht, dass die Anlagestruktur flächig um die Bauteilöffnung anliegt und die Öffnung vollständig abdeckt und somit auch abdichten kann.

Weiterhin ist es bevorzugt, dass die ersten Vorsprünge an der Außenseite in jeder Ecke der polygonalen Form oder an jeder Seitenfläche der polygonalen Form vorgesehen sind. Dabei ist es im Rahmen dieser Ausgestaltung besonders vorteilhaft, wenn jedem in jeder Ecke angeordneten ersten Vorsprung an der Außenseite ein zweiter Vorsprung an der Innenseite zugeordnet ist oder jedem an einer Seitenfläche angeordneten ersten Vorsprung ein zweiter Vorsprung zugeordnet ist. Durch die Bereitstellung der ersten Vorsprünge entweder in jeder Ecke der polygonalen Form oder an jeder Seitenfläche kann das weibliche Kupplungselement an den jeweiligen Anwendungsfall optimal angepasst werden. Besonders bevorzugt ist in diesem Zusammenhang die Ausgestaltung, dass die zweiten Vorsprünge analog zu den ersten Vorsprüngen vorgesehen sind. Denn gerade auf diese Weise bewirkt ein Einsetzen eines entsprechenden männlichen Kupplungselements, dass die ersten Vorsprünge radial so weit nach außen bewegt werden, dass die über die Steckkupplung hergestellte Verbindung die erforderlichen Auszugskräfte bereitstellt.

In einer weiteren bevorzugten Ausführungsform des weiblichen Kupplungselements weist jeder zweite Vorsprung, d.h. jeder Vorsprung auf der Innenseite, eine Einführschräge auf, die einen Winkel mit der zentralen Längsachse des Kupplungselements zwischen 10° und 40° einschließt. Die Bereitstellung einer Einführschräge hat den Vorteil, dass damit die Kraft nach außen und nicht nach oben in Richtung des zweiten axialen Endes geleitet wird. Somit wird besonders effektiv sichergestellt, dass das weibliche Kupplungselement nicht weiter in die Bauteilöffnung hineingedrückt und im ungünstigsten Fall durch die Bauteilöffnung hindurchgedrückt wird.

Vorteilhafterweise gilt, wenn zwei erste Vorsprünge an gegenüberliegend Ecken angeordnet sind, für ein Verhältnis einer Außendiagonalen D_{A} im Bereich der ersten Vorsprünge zu einer Außendiagonalen D_{W} im Bereich der Wand: 1,15 D_{W} ≤ D_{A} ≤ 1,2 D_{W}. Besonders im Hinblick auf die Verwendung im Rahmen der Bauteilöffnung ist das Verhältnis der Außendiagonale D_{A} im Bereich der ersten Vorsprünge zur Außendiagonale D_{W} im Bereich der Wand zu betrachten.

Ausgehend von dem obigen Beispiel, bei dem die Diagonale D_{B} für die Bauteilöffnung 20 mm betrug, liegt die Diagonale D_{W} im Bereich der Wand zwischen 18,0 mm und 18,3 mm. Aus Übersichtlichkeitsgründen wird von einer Diagonalen D_{W} mit 18,3 mm ausgegangen. Der im Bereich der Wand vorhandene Gesamtabstand beträgt dann 1,7 mm, so dass bei einem zentral angeordneten weiblichen Kupplungselement ein Spalt b von 0,85 mm an zwei diagonal gegenüberliegenden Ecken vorhanden ist.

Die Diagonale D_{A} im Bereich der ersten Vorsprünge liegt somit zwischen 21,045 mm und 21,96 mm. Hieraus ergibt sich ein Gesamtüberstand im Bereich der ersten Vorsprünge von 1,045 bis 1,96 mm. Ein Überstand z für jeweils einen ersten Vorsprung auf dem ersten Bauteil liegt somit zwischen 0,5225 mm und 0,98 mm. Dies verdeutlicht die geringe Überdeckung der ersten Vorsprünge mit dem ersten Bauteil im Rahmen der Vormontage.

Eine erfindungsgemäße zweiteilige Steckkupplung umfasst ein erfindungsgemäßes weibliches Kupplungselement sowie ein männliches Kupplungselement aufweisend einen Schaft und einen Kugelkopf, die über eine dazwischen angeordnete Verjüngung getrennt sind. Im Rahmen der erfindungsgemäßen Steckkupplung wird somit das erfindungsgemäße weibliche Kupplungselement verwendet. Bezüglich der daraus resultierenden Vorteile wird auf die obigen Ausführungen verwiesen.

In einer bevorzugten Ausführungsform der zweiteiligen Steckkupplung ist ein Außendurchmesser D_{S} des Schafts gleich oder größer einem Außendurchmesser D_{K} des Kugelkopfs, so dass gilt: D_{S} ≥ D_{K}. Wie bereits eingangs aufgeführt ist gerade der Durchmesser des Schafts des männlichen Kupplungselements unter Berücksichtigung des Durchmessers des Kugelkopfs des männlichen Kupplungselements wichtig. Denn mit dem Schaft wird der Spalt im Bereich der ersten Vorsprünge verringert.

Vorteilhafterweise gilt für einen Außendurchmesser D_{S} des Schafts bezogen auf eine Innendiagonale d_{I} im Bereich von zwei zweiten Vorsprüngen, die einander gegenüber angeordnet sind: 1,1 d_{I} ≤ D_{S} ≤ 1,26 d_{I}. Aufgrund dieser Verhältnismäßigkeit ist der Innendurchmesser d_{I} im Bereich der zweiten Vorsprünge immer kleiner als der Außendurchmesser D_{S} des Schafts des männlichen Kupplungselements. Hierdurch wird ein besonders effektives Drücken des weiblichen Kupplungselements radial nach außen im Bereich der ersten und zweiten Vorsprünge realisiert.

In diesem Zusammenhang kann ergänzend oder alternativ das Verhältnis von Überlappung a zu Spalt b berücksichtigt werden, für das vorzugsweise gilt: 0,6 b ≤ a ≤ 1,3 b.

Dabei ist es besonders vorteilhaft, wenn das männliche Kupplungselement im vollständig eingekoppelten Zustand das weibliche Kupplungselement oberhalb des ersten Bauteils radial nach außen drückt. Gerade hierdurch wird die hohe Kraft zur Demontage des männlichen Kupplungselements aus dem weiblichen Kupplungselement generiert und das weibliche Kupplungselement nicht aus dem Bauteil gezogen.

Ein erfindungsgemäßes erstes Bauteil weist eine polygonale Bauteilöffnung auf, in der ein erfindungsgemäßes weibliches Kupplungselement vormontiert ist. In einer bevorzugten Ausführungsform des ersten Bauteils gilt für eine Innendiagonale d_{B} der Bauteilöffnung bezogen auf eine Außendiagonale D_{W} der Wand: 1,09 D_{W} ≤ d_{B} ≤ 1,11 D_{W}. Bezugnehmend auf das obige Beispiel wurde eine beispielhaften Innendiagonale d_{B} für die Bauteilöffnung mit 20 mm angenommen. Die Außendiagonale D_{W} im Bereich der Wand liegt bei dem Verhältnis d_{B} = 1,09 D_{W} bei 18,3 mm.

Im Rahmen des erfindungsgemäßen ersten Bauteils wird das erfindungsgemäße weibliche Kupplungselement verwendet, sodass auf die obigen Ausführungen verwiesen wird. Gerade die hier gewählte Verhältnismäßigkeit der Innendiagonale d_{B} der Bauteilöffnung bezogen auf eine Außendiagonale D_{W} der Wand gewährleistet die besonders vorteilhafte oben erläuterte Funktionsweise, d. h. das manuelle Eindrücken ohne Werkzeug zur Vormontage des weiblichen Kupplungselements sowie die anschließende Verriegelung nach dem Einführen des männlichen Kupplungselements.

Eine erfindungsgemäße Bauteilstruktur besteht aus dem erfindungsgemäßen ersten Bauteil sowie einem zweiten Bauteil mit männlichem Kupplungselement aufweisend einen Schaft und einen Kugelkopf, die über eine dazwischen angeordnete Verjüngung getrennt sind, wobei der Kugelkopf zumindest teilweise in der kugelpfannenartigen Aufnahme angeordnet ist. Gemäß einer vorteilhaften Ausführungsform der Bauteilstruktur gilt, bei einer zentralen Anordnung des weiblichen Kupplungselements in der Bauteilöffnung des ersten Bauteils für den Außendurchmesser D_{S} des Schafts bezogen auf einen Spalt b, der zwischen der Wand des weiblichen Kupplungselements im Bereich der ersten Vorsprünge und der Bauteilöffnung in einem nicht montierten Zustand des männlichen Kupplungselements vorhanden ist: 11 b ≤ D_{S} ≤ 15,6 b.

Als Außendurchmesser D_{S} wurde oben ein Wert von 10 mm angenommen. Ausgehend von der obigen Beziehung muss der Spalt b zwischen 0,6 mm und 0,9 mm liegen. In dem eingangs verwendeten Beispiel wurde von einem Spalt b mit 0,85 mm ausgegangen, was bei dem Schaftdurchmesser D_{S} von 10 mm zu dem Verhältnis führt D_{S} = 11,76 b.

Auch hier wird zur Vermeidung von Wiederholungen auf die obigen Ausführungen verwiesen, da die erfindungsgemäße Bauteilstruktur die erfindungsgemäße Steckkupplung bzw. das erfindungsgemäße erste Bauteil in Verbindung mit einem männlichen Kupplungselement verwendet. Ausgehend von den obigen Verhältnismäßigkeiten ist die zusätzliche Verhältnismäßigkeit des Spalts bezogen auf die Außendurchmesser des Schafts aufgeführt. Denn hierdurch kann besonders effektiv sichergestellt werden, dass das weibliche Kupplungselement in abdichtender Weise in dem ersten Bauteil angeordnet ist, wenn das männliche Kupplungselement eingesetzt ist.

Ein erfindungsgemäßes Verbindungsverfahren eines ersten Bauteils mit einer polygonalen Bauteilöffnung mit einem zweiten Bauteil mittels einer erfindungsgemäßen zweiteiligen Steckkupplung umfasst die folgenden Schritte: Bereitstellen des weiblichen Kupplungselements und Einführen des weiblichen Kupplungselements in die polygonale Bauteilöffnung des ersten Bauteils oder Bereitstellen des ersten Bauteils mit darin vormontiertem weiblichen Kupplungselement, Bereitstellen eines zweiten Bauteils mit männlichem Kupplungselement aufweisend einen Schaft und einen Kugelkopf, die über eine dazwischen angeordnete Verjüngung getrennt sind, und Einführen des Kugelkopfs in das weibliche Kupplungselement, bis der Kugelkopf zumindest teilweise in einer kugelpfannenartigen Aufnahme angeordnet ist, wobei der Schaft eine radial nach außen gerichtete Verformungsbewegung des weiblichen Kupplungselements im Bereich der ersten und der zweiten Vorsprünge bewirkt. Das erfindungsgemäße Verbindungsverfahren verwendet das erfindungsgemäße weibliche Kupplungselement. Daher wird auch in diesem Zusammenhang auf die obigen Ausführungen verwiesen, um Wiederholungen zu vermeiden.

### 4. Kurzzusammenfassung der Zeichnungen

Nachfolgend wird die vorliegende Erfindung unter Bezugnahme auf die Zeichnungen detailliert beschrieben. Gleiche Bezugszeichen in den Zeichnungen bezeichnen dabei gleiche Bauteile und/oder Elemente. Es zeigen:
- Figur 1: eine erste perspektivische Ansicht einer Ausführungsform eines erfindungsgemäßen weiblichen Kupplungselements,
- Figur 2: eine zweite perspektivische Ansicht einer Ausführungsform eines erfindungsgemäßen weiblichen Kupplungselements,
- Figur 3: eine erste Teilschnittansicht des weiblichen Kupplungselements gemäß Fig. 1,
- Figur 4: eine zweite Teilschnittansicht des weiblichen Kupplungselements gemäß Fig. 1,
- Figur 5: eine Ansicht des weiblichen Kupplungselements gemäß Fig. 1 von oben,
- Figur 6: eine Ansicht des weiblichen Kupplungselements gemäß Fig. 1 von unten,
- Figur 7: eine Schnittansicht einer Ausführungsform einer erfindungsgemäßen Bauteilstruktur,
- Figur 8a: eine Querschnittansicht im Bereich der Wand des weiblichen Kupplungselements,
- Figur 8b: eine vergrößerte Ansicht eines Ausschnitts von Figur 8a,
- Figur 9: eine Schnittansicht des weiblichen Kupplungselements im ersten Bauteil mit eingesetztem männlichen Kupplungselement,
- Figur 10: eine erste Schnittansicht des weiblichen Kupplungselements im ersten Bauteil mit nicht vollständig eingesetztem männlichen Kupplungselement,
- Figur 11: eine zweite Schnittansicht des weiblichen Kupplungselements im ersten Bauteil mit nicht vollständig eingesetztem männlichen Kupplungselement,
- Figur 12: eine Schnittansicht des weiblichen Kupplungselements im ersten Bauteil mit nicht vollständig eingesetztem männlichen Kupplungselement zur Verdeutlichung der Einführschräge und
- Figur 13: ein schematisches Flussdiagramm einer Ausführungsform eines erfindungsgemäßen Verbindungsverfahrens.

### 5. Detaillierte Beschreibung der bevorzugten Ausführungsformen

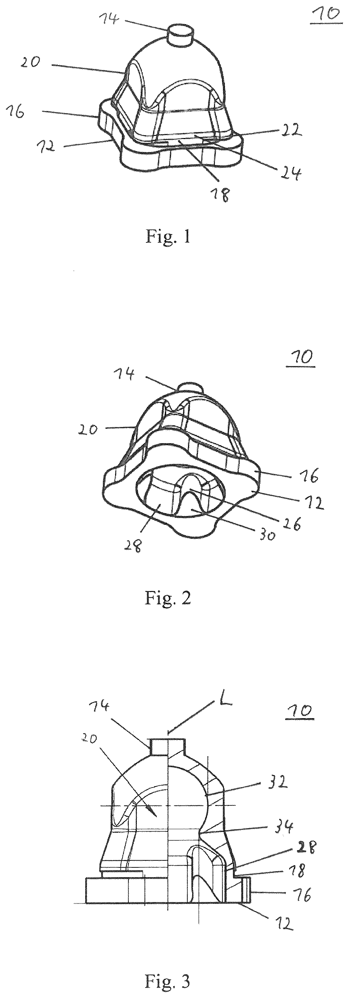

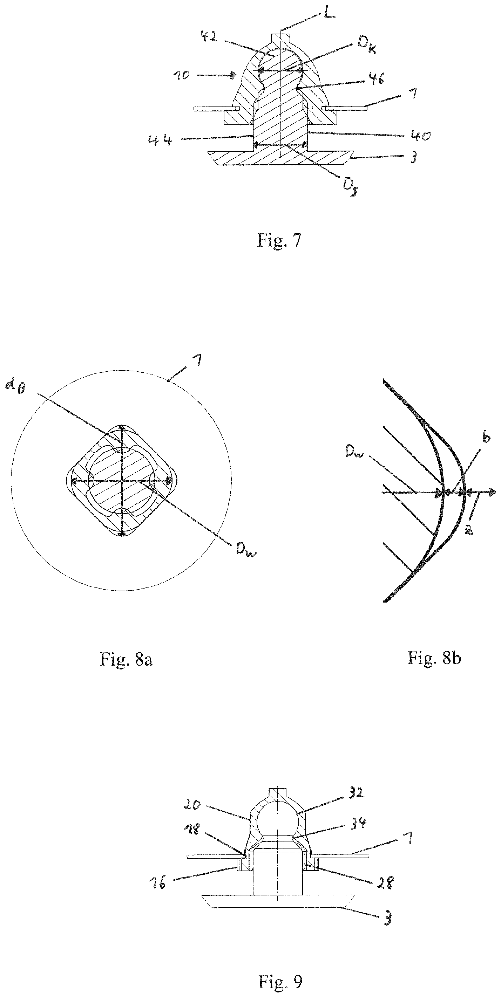

Nachfolgend wird eine Ausführungsform des erfindungsgemäßen weiblichen Kupplungselements 10 unter Bezugnahme auf die Figuren erläutert. Dazu zeigen die Figuren 1 bis 6 den Aufbau des weiblichen Kupplungselements 10, während die Figuren 7 bis 12 die Dimensionierung sowie die Verwendung illustrieren. Einleitend ist hierbei hervorzuheben, dass das weibliche Kupplungselement 10 vorzugsweise aus einem der folgenden Materialien oder einer Kombination davon gebildet ist: Polypropylen, Silikon und/oder EPDM. Denn durch die geeignete Materialwahl kann das weibliche Kupplungselement 10 auf den jeweiligen Anwendungsfall angepasst werden.

Das weibliche Kupplungselement 10 weist ein erstes 12 sowie ein zweites axiales Ende 14 auf. Das erste axiale Ende 12 des weiblichen Kupplungselements 10 ist offen ausgebildet, während das zweite axiale Ende 14 geschlossen ausgebildet ist.

Am ersten axialen Ende 12 ist eine in umfänglicher Richtung verlaufende polygonale äußere flanschartige Anlagestruktur 16 vorgesehen. In der dargestellten Ausführungsform weist die Anlagestruktur 16 vier Ecken auf, die abgerundet sind.

Zudem ist eine domartige Haltestruktur 20 mit einer polygonalen Außenseite vorhanden. Die Haltestruktur 20 ist von der Anlagestruktur 16 axial durch eine in einer Längsrichtung des Kupplungselements 10 und umfänglich verlaufende Wand 18 beabstandet.

Die Haltestruktur 20 weist in Umfangsrichtung mehrere auswärts gerichtete erste Vorsprünge 22 und erste Ausnehmungen 24 auf, die wechselweise angeordnet sind. Auch die Haltestruktur 20 weist vier Ecken auf. Neben der Ausgestaltung mit vier Ecken sind auch Ausgestaltungen mit drei, vier, fünf oder sechs Ecken möglich, die insbesondere abgerundet sind.

In der dargestellten Ausführungsform sind die ersten Vorsprünge 22 an der Außenseite in jeder Ecke der polygonalen Form vorgesehen. Die Außendiagonale im Bereich der ersten Vorsprünge 22 wird mit D_{A} und die Außendiagonale im Bereich der Wand 18 wird mit D_{W} bezeichnet. Die Beziehung der beiden Außendiagonalen zueinander wird später im Rahmen der Verwendung des weiblichen Kupplungselements 10 diskutiert.

Im Inneren des weiblichen Kupplungselements 10 sind benachbart zum offenen ersten axialen Ende 12 mehrere in Umfangsrichtung angeordnete einwärts gerichtete zweite Vorsprünge 26 und Ausnehmungen 28 vorgesehen, die ebenfalls wechselweise angeordnet sind. Eine Innendiagonale im Bereich der zweiten Vorsprünge 26 wird mit d_{I} bezeichnet.

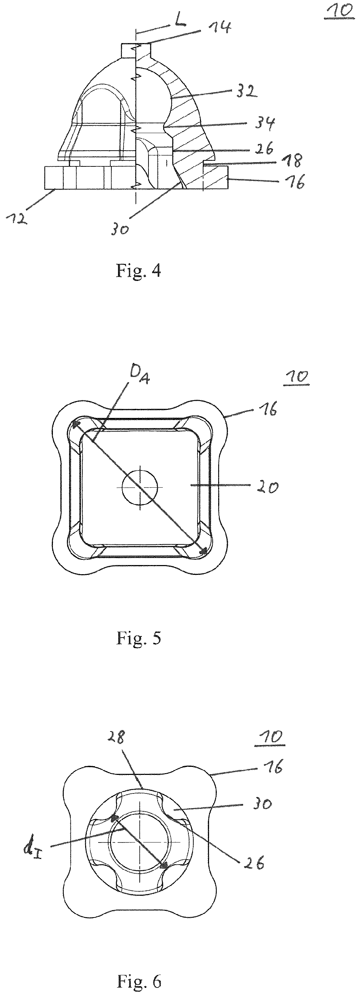

Die zweiten Vorsprünge 26 sind bezogen auf eine zentrale Längsachse L des weiblichen Kupplungselements 10 zu den ersten Vorsprüngen 22 ausgerichtet. Die zweiten Vorsprünge 26 weisen eine solche axiale Erstreckung auf, dass die Wand 18 im Bereich der zweiten Vorsprünge 26 dicker im Vergleich zu dem Bereich an den zweiten Ausnehmungen 28 ist. Dies ist insbesondere bei einem Vergleich der Figuren 3 und 4 erkennbar.

Aufgrund dieser Gestaltung ist bei einem Einsetzen des weiblichen Kupplungselements 10 in eine polygonale Bauteilöffnung ein Material des weiblichen Kupplungselements 10 im Bereich der ersten 24 und der zweiten Ausnehmungen 28 in umfänglicher Richtung elastisch komprimierbar.

Jedem in jeder Ecke angeordneten ersten Vorsprung 22 an der Außenseite ist ein zweiter Vorsprung 26 an der Innenseite zugeordnet. Gerade bei dieser Anordnung der ersten 22 und zweiten Vorsprünge 26 zueinander bewirkt ein Einsetzen eines entsprechenden männlichen Kupplungselements 40, dass die ersten Vorsprünge 22 radial so weit nach außen bewegt werden, dass die über die Steckkupplung hergestellte Verbindung die erforderlichen Auszugskräfte bereitstellt.

Alternativ zu der gezeigten Ausführungsform können die ersten Vorsprünge 22 an der Außenseite an jeder Seitenfläche der polygonalen Form vorgesehen sein. In diesem Fall ist es bevorzugt, dass jedem an einer Seitenfläche angeordneten ersten Vorsprung 22 ein zweiter Vorsprung 26 zugeordnet ist. Die Zuordnung erfolgt dabei in analoger Weise so, dass die zweiten Vorsprünge 26 radial innen in Ausrichtung mit den ersten Vorsprüngen 22 vorgesehen sind.

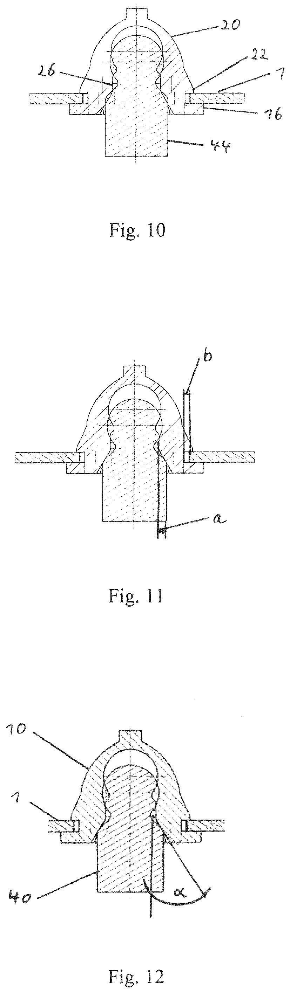

Jeder zweite Vorsprung 26 an der Innenseite weist eine Einführschräge 30 auf. Diese schließt einen Winkel α mit der zentralen Längsachse L des weiblichen Kupplungselements 10 zwischen 10° und 40° ein (siehe Figur 12). Die Bereitstellung der Einführschräge 30 hat den Vorteil, dass damit die Kraft nach außen und nicht nach oben in Richtung des zweiten axialen Endes 14 geleitet wird. Somit wird besonders effektiv sichergestellt, dass das weibliche Kupplungselement 10 nicht weiter in die Bauteilöffnung hineingedrückt und im schlechtesten Fall durch die Bauteilöffnung hindurchgedrückt wird.

Weiterhin weist das weibliche Kupplungselement 10 im Inneren eine kugelpfannenartige Aufnahme 32 benachbart zum zweiten axialen Ende 14 auf. In diesem Zusammenhang ist es besonders bevorzugt, dass in Richtung des ersten axialen Endes 12 angrenzend an die kugelpfannenartige Aufnahme 32 ein umfänglich verlaufender nach innen ragender Vorsprung 34 vorhanden ist, der vorzugsweise vollständig umlaufend ausgebildet ist.

Die vorgesehenen ersten 24 und zweiten Ausnehmungen 28 stellen daher Dünnstellen im Material des weiblichen Kupplungselements 10 bereit, die ein Komprimieren, beispielsweise in Form eines Zusammenfaltens des weiblichen Kupplungselements bei der Montage ermöglichen. Gerade durch diese Ausnehmungen 24, 28 und das Komprimieren des weiblichen Kupplungselements 10 sind die durch die ersten Vorsprünge 22 auf der Außenseite geschaffenen Hinterschnitte, die bei anderen Kupplungen mit Kraft durch die Aufnahme gedrückt werden müssen, kleiner und vorzugsweise innerhalb der polygonalen Bauteilöffnung. Somit werden geringere Montagekräfte beim Montieren des weiblichen Kupplungselements 10 in dem ersten Bauteil 1 erzeugt. Erst nach Einsetzen eines geeigneten männlichen Kupplungselements 40 ist die ordnungsgemäße Funktionsweise des weiblichen Kupplungselements 10 gegeben. Dabei ist das Zusammenwirken zwischen männlichem 40 und weiblichem Kupplungselement 10 im Vergleich zu bekannten Steckkupplungen dahingehend anders, dass das männliche Kupplungselement 40 das weibliche Kupplungselement 10 spreizt und sichert, anstatt dass das weibliche Kupplungselement mittels Klemmung im ersten Bauteil 1 befestigt wird und das männliche Kupplungselement keinen Einfluss auf die Sicherung des weiblichen Kupplungselements in der Bauteilöffnung hat, sondern beispielsweise im Schaftbereich radiales Spiel zum weiblichen Kupplungselement aufweist, wie dies bei den aus dem Stand-der-Technik bekannten Anordnungen der Fall ist.

Nun bezugnehmend auf die Figuren 7 bis 12 wird das Vorgehen im Rahmen der Herstellung einer Verbindung zwischen zwei Bauteilen 1, 3 erläutert. Denn mit dem so gestalteten weiblichen Kupplungselement 10 kann, wie in Figur 7 gezeigt, eine lösbare Verbindung eines ersten Bauteils 1 mit polygonaler Bauteilöffnung und einem zweiten Bauteil 3 realisiert werden.

Hierzu ist neben dem ersten 1 und dem zweiten Bauteil 3 ein männliches Kupplungselement 40 mit Schaft 44 und Kugelkopf 42 erforderlich. Kugelkopf 42 und Schaft 44 sind über eine dazwischen angeordnete Verjüngung 46 voneinander getrennt. In der dargestellten Ausführungsform ist das männliche Kupplungselement 40 integral an dem zweiten Bauteil 3 ausgebildet. Alternativ kann es fest mit dem zweiten Bauteil 3 verbunden sein. Ein Außendurchmesser des Schafts 44 des männlichen Kupplungselements 40 wird mit D_{S} und ein Außendurchmesser des Kugelkopfs 42 mit D_{K} bezeichnet.

Um die Verbindung zwischen dem ersten 1 und dem zweiten Bauteil 3 herzustellen, wird das weibliche Kupplungselement 10 in einem ersten Schritt in die polygonale Bauteilöffnung des ersten Bauteils 1 eingeführt. In der dargestellten Ausführungsform handelt es sich um eine rechteckige Bauteilöffnung mit abgerundeten Ecken. Sowohl die Haltestruktur 20 wie auch die Anlagestruktur 16 und die Wand 18 weisen ebenfalls eine rechteckige Form mit abgerundeten Ecken auf. Da die Haltestruktur 20 somit analog zu der polygonalen Bauteilöffnung ausgestaltet ist, kann das weibliche Kupplungselement 10 in der Bauteilöffnung vororientiert werden. Die Ausgestaltung der Anlagestruktur 16 analog zu der polygonalen Bauteilöffnung ermöglicht, dass die Anlagestruktur 16 flächig um die Bauteilöffnung anliegt und die Öffnung vollständig abdeckt und somit auch abdichten kann.

In der dargestellte Ausführungsform wird beispielhaft von einer Innendiagonalen d_{B} der Bauteilöffnung von 20 mm ausgegangen. Für ein Verhältnis der Innendiagonale d_{B} der Bauteilöffnung bezogen auf die Außendiagonale D_{W} der Wand 18 gilt: 1,09 D_{W} ≤ d_{B} ≤ 1,11 D_{W}. Die Außendiagonale D_{W} der Wand 18 liegt somit zwischen 18,0 mm und 18,3 mm. Um das Verständnis zu erleichtern, wird nachfolgend der Wert von 18,3 mm für die Außendiagonale D_{W} der Wand 18 verwendet.

Aufgrund dieser Dimensionierung ist zumindest im Bereich der abgerundeten Ecken ein Spalt b zwischen der Bauteilöffnung und der Wand 18 des weiblichen Kupplungselements vorhanden. In diesem Zusammenhang wird auch auf die Figuren 8a und 8b verwiesen, die einen Schnitt im Bereich der Wand 18 in einer Ebene senkrecht zur Längsachse L zeigen. Der im Bereich der Wand 18 vorhandene Gesamtabstand beträgt 1,7 mm, so dass bei einem zentral angeordneten weiblichen Kupplungselement 10 ein Spalt b von 0,85 mm an zwei diagonal gegenüberliegenden Ecken vorhanden ist.

Für ein Verhältnis der Außendiagonalen D_{A} im Bereich der ersten Vorsprünge 22, die wie in der dargestellten Ausführungsform einander gegenüberliegend angeordnet sind, zu einer Außendiagonalen D_{W} im Bereich der Wand 18 gilt 1,15 D_{W} ≤ D_{A} ≤ 1,2 D_{W}. Ausgehend von D_{W} = 18,3 mm liegt die Diagonale D_{A} im Bereich der ersten Vorsprünge somit zwischen 21,045 mm und 21,96 mm. Hieraus ergibt sich ein Gesamtüberstand im Bereich der ersten Vorsprünge von 1,045 bis 1,96 mm. Ein Überstand z für jeweils einen ersten Vorsprung 22 auf dem ersten Bauteil 1 liegt somit zwischen 0,5225 mm und 0,98 mm. Dies verdeutlicht die geringe Überdeckung der ersten Vorsprünge 22 mit dem ersten Bauteil 1 im Rahmen der Vormontage. Im Übrigen, d.h. im Bereich der ersten 24 und zweiten Ausnehmungen 28 liegt die Wand 18 an der Bauteilöffnung des ersten Bauteils 1 an, wie aus den Figuren 8a und 8b ebenfalls ersichtlich ist. In diesem Zusammenhang ist es bevorzugt, dass die Wand 18 umlaufend geschlossen ausgebildet ist.

Aufgrund der besonderen Formgestaltung des weiblichen Kupplungselements 10 kann dieses ohne Verwendung eines Werkzeugs in die Bauteilöffnung eingesetzt werden. Denn durch die in axialer Richtung miteinander und somit zueinander ausgerichteten Ausnehmungen 24, 28 auf der Innen- und auf der Außenseite kann das Kupplungselement 10 an diesen Stellen elastisch komprimiert werden. Bei dem elastischen Komprimieren kann es sich neben einem Stauchen auch um ein Falten handeln. Hierdurch wird das Einsetzen des Kupplungselements 10 in die polygonale Bauteilöffnung des ersten Bauteils 1 erleichtert.

Vorzugsweise ist es aufgrund der besonderen Gestaltung des weiblichen Kupplungselements 10 möglich, dieses mit einer Kraft von ≤ 50 N in das erste Bauteil 1 einzubringen, wobei das weibliche Kupplungselement 10 aus einem Material besteht, dass eine Shore A-Härte bei Raumtemperatur von unter 70 aufweist. Bezüglich der Ermittlung der Shore-A-Härte wird auf DIN ISO 7619-1 sowie DIN EN ISO 868 verwiesen.

Sobald die ersten Vorsprünge 22 die polygonale Bauteilöffnung passiert haben, erstrecken diese sich elastisch nach außen und das weibliche Kupplungselement 10 ist in dem ersten Bauteil 1 vormontiert. Der Begriff "vormontiert" gibt an, dass das weibliche Kupplungselement 10 noch nicht final befestigt ist. Vielmehr ist es lediglich so in der Bauteilöffnung angeordnet, dass im Wesentlichen eine Verlierersicherung für das weibliche Kupplungselement 10 im ersten Bauteil 1 bereitgestellt ist. In diesem Zustand liegt die parallel zur zentralen Längsachse L verlaufende Wand des weiblichen Kupplungselements 10 vorzugsweise nur im Bereich der ersten Ausnehmungen 24 und nicht im Bereich der ersten Vorsprünge 22 an der Bauteilöffnung an.

Eine sichere Befestigung des weiblichen Kupplungselements 10 im ersten Bauteil 1 und damit eine ordnungsgemäß funktionierende Steckkupplung, d.h. eine lösbare Verbindung zwischen den Bauteilen 1, 3, wird erst durch das Einführen des männlichen Kupplungselements 40 in das weibliche Kupplungselement 10 realisiert.

Das entsprechende männliche Kupplungselement 40 ist so gestaltet, dass der Schaft 44 des männlichen Kupplungselements 40 einen Außendurchmesser D_{S} aufweist, der mindestens dem Außendurchmesser D_{K} des Kugelkopfs 42 entspricht. Dementsprechend gilt in der dargestellten Ausführungsform D_{S} ≥ D_{K}. Ein Beispiel für einen entsprechenden Außendurchmesser liegt bei 10 mm für D_{S} und D_{K}.

Weiterhin gilt für den Außendurchmesser D_{S} des Schafts 44 bezogen auf eine Innendiagonale d_{I} im Bereich von zwei zweiten Vorsprüngen 26, die einander gegenüber angeordnet sind: 1,1 d_{I} ≤ D_{S} ≤ 1,26 d_{I}. Aufgrund dieser Verhältnismäßigkeit ist der Innendurchmesser d_{I} im Bereich der zweiten Vorsprünge 26 immer kleiner als der Außendurchmesser D_{S} des Schafts 44 des männlichen Kupplungselements 40. Hierdurch wird ein besonders effektives Drücken des weiblichen Kupplungselements 10 radial nach außen im Bereich der ersten 22 und zweiten Vorsprünge 26 realisiert. Ausgehend von dem Beispiel mit 10 mm für den Außendurchmesser D_{S} des Schafts 44, liegt die Innendiagonale d_{I} daher im Bereich zwischen 7,9 mm und 9,1 mm. Hierdurch ergibt sich eine Gesamtüberdeckung im Querschnitt von 0,9 bis 2,1 mm. Eine Breite der jeweiligen Überlappung a liegt somit zwischen 0,45 und 1,05 mm.

Da der zu schließende Spalt b 0,85 mm beträgt, ist die Wahl einer Überlappung a in Richtung der oberen Grenzen zu bevorzugen. In diesem Zusammenhang kann ergänzend oder alternativ das Verhältnis von Überlappung a zu Spalt b berücksichtigt werden, für das vorzugsweise gilt: 0,6 b ≤ a ≤ 1,3 b. Die Überlappung a sollte somit zwischen 0,51 und 1,105 mm liegen.

Bei einer zentralen Anordnung des weiblichen Kupplungselements 10 in der Bauteilöffnung des ersten Bauteils 1 gilt für den Außendurchmesser D_{S} des Schafts 44 bezogen auf einen Spalt b, der zwischen der Wand 18 des weiblichen Kupplungselements 10 im Bereich der ersten Vorsprünge 22 und der Bauteilöffnung in einem nicht montierten Zustand des männlichen Kupplungselements 40 vorhanden ist: 11 b ≤ DS ≤ 15,6 b. Als Außendurchmesser D_{S} wurde eingangs ein Wert von 10 mm angenommen. Hieraus resultiert ein Spalt b zwischen 0,6 mm und 0,9 mm. In dem obigen Beispiel wurde von einem Spalt b mit 0,85 mm ausgegangen, was zu dem Verhältnis führt D_{S} = 11,76 b.

Aufgrund dieser Verhältnisse zueinander ist eine axiale Einsetzkraft zur Vormontage des weiblichen Kupplungselements 10 in der polygonalen Bauteilöffnung des ersten Bauteils 1 reduziert ist. Erst ein Einsetzen des männlichen Kupplungselements 40 mit einem Schaft 44 und einem Kugelkopf 42 bewirkt, dass der Schaft 44 des männlichen Kupplungselements 40 eine radial nach außen gerichtete Verformungsbewegung auf das weibliche Kupplungselements 10 im Bereich der zueinander ausgerichteten ersten 22 und zweiten Vorsprünge 26 ausübt und das weibliche Kupplungselement 10 im ersten Bauteil 1 fixiert. Denn da die zweiten Vorsprünge 26 auf der Innenseite mit den ersten Vorsprüngen 22 auf der Außenseite ausgerichtet sind, wird das weibliche Kupplungselement 10 in diesem Bereich radial nach außen gedrückt. Dadurch werden entsprechend die ersten Vorsprünge 22 auf der Außenseite radial nach außen bewegt, was eine ordnungsgemäße Befestigung des weiblichen Kupplungselements 10 im ersten Bauteil 1 im Rahmen der lösbaren Steckverbindung bereitstellt. Somit sind die Kräfte zum Entfernen des weiblichen Kupplungselements 10 aus der Bauteilöffnung im ersten Bauteil 1 mit eingesetztem männlichen Kupplungselement 40 größer im Vergleich zu der Anordnung ohne männliches Kupplungselement 40, d.h. im Vergleich zum vormontierten Zustand.

Dabei ist es besonders vorteilhaft, wenn das männliche Kupplungselement 40 das weibliche Kupplungselement 10 im vollständig eingekoppelten Zustand oberhalb des ersten Bauteils 1 radial nach außen drückt. Gerade hierdurch wird die hohe Kraft zur Demontage des männlichen Kupplungselements 40 aus dem weiblichen Kupplungselement 10 generiert und das weibliche Kupplungselement 10 nicht aus dem ersten Bauteil 1 gezogen.

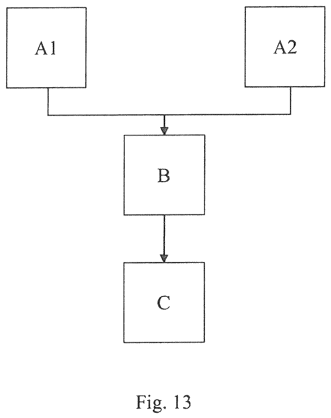

Nun bezugnehmend auf Figur 13 wird eine Ausführungsform eines Verbindungsverfahrens des ersten Bauteils 1 mit einer polygonalen Bauteilöffnung mit einem zweiten Bauteil 3 mittels der zweiteiligen Steckkupplung erläutert. In einem ersten Schnitt A1 erfolgt ein Bereitstellen des weiblichen Kupplungselements 10 sowie ein Einführen des weiblichen Kupplungselements 10 in die polygonale Bauteilöffnung des ersten Bauteils 1. Alternativ erfolgt in Schritt A2 ein Bereitstellen des ersten Bauteils 1 mit darin vormontiertem weiblichen Kupplungselement 10.

Nachfolgend erfolgt in Schritt B ein Bereitstellen eines zweiten Bauteils 3 mit männlichem Kupplungselement 40 aufweisend einen Schaft 44 und einen Kugelkopf 42, die über eine dazwischen angeordnete Verjüngung 46 getrennt sind.

Ein Einführen des Kugelkopfs 42 in das weibliche Kupplungselement 10, bis der Kugelkopf 42 zumindest teilweise in einer kugelpfannenartigen Aufnahme 32 angeordnet ist, erfolgt in Schritt C. Hierbei bewirkt der Schaft 44 eine radial nach außen gerichtete Verformungsbewegung des weiblichen Kupplungselements 10 im Bereich der ersten 22 und der zweiten Vorsprünge 26.

### 6. Bezugszeichenliste

- 1: erstes Bauteil
- 3: zweites Bauteil

- 10: weibliches Kupplungselement
- 12: erstes axiales Ende
- 14: zweites axiales Ende
- 16: Anlagestruktur
- 18: Wand
- 20: Haltestruktur
- 22: erster Vorsprung
- 24: erste Ausnehmung
- 26: zweiter Vorsprung
- 28: zweite Ausnehmung
- 30: Einführschräge
- 32: Aufnahme
- 34: Vorsprung

- 40: männliches Kupplungselement
- 42: Kugelkopf
- 44: Schaft
- 46: Verjüngung

- α: Winkel der Einführschräge 30
- a: Überlappung zwischen Schaft 44 und zweitem Vorsprung 26
- b: Spalt

- d_{B}: Innendiagonale der Bauteilöffnung
- d_{I}: Innendiagonale im Bereich der zweiten Vorsprünge 26

- D_{A}: Außendiagonale im Bereich der ersten Vorsprünge 22
- D_{K}: Außendurchmesser des Kugelkopfs 42
- D_{S}: Außendurchmesser des Schafts 44
- D_{W}: Außendiagonale im Bereich der Wand 18

- L: zentrale Längsachse

- z: Überstand der ersten Vorsprünge 22

## Patentansprüche

1. Ein weibliches Kupplungselement (10) einer zweiteiligen Steckkupplung zum lösbaren Verbinden eines ersten Bauteils (1) mit polygonaler Bauteilöffnung und eines zweiten Bauteils (3), wobei das weibliche Kupplungselement (10) die folgenden Merkmale umfasst:
a) eine in umfänglicher Richtung verlaufende polygonale äußere flanschartige Anlagestruktur (16) an einem offenen ersten axialen Ende (12) sowie eine domartige Haltestruktur (20) mit einer polygonalen Außenseite, die in Umfangsrichtung mehrere auswärts gerichteten erste Vorsprünge (22) und Ausnehmungen (24) aufweist, die wechselweise angeordnet sind, wobei die Haltestruktur (20) von der Anlagestruktur (16) axial durch eine in einer Längsrichtung des Kupplungselements (10) und umfänglich verlaufende Wand (18) beabstandet ist, sowie
b) im Inneren des weiblichen Kupplungselements (10) benachbart zum offenen ersten axialen Ende (12) mehrere in Umfangsrichtung angeordnete einwärts gerichtete zweite Vorsprünge (26) und Ausnehmungen (28), die wechselweise angeordnet sind, wobei die zweiten Vorsprünge (26) bezogen auf eine zentrale Längsachse (L) des weiblichen Kupplungselements (10) zu den ersten Vorsprüngen (22) ausgerichtet sind und die zweiten Vorsprünge (26) eine solche axiale Erstreckung aufweisen, dass die Wand (18) im Bereich der zweiten Vorsprünge (26) dicker im Vergleich zu dem Bereich an den zweiten Ausnehmungen (28) ist, so dass
c) bei einem Einsetzen des weiblichen Kupplungselements (10) in die polygonale Bauteilöffnung ein Material des weiblichen Kupplungselements (10) im Bereich der ersten (24) und der zweiten Ausnehmungen (28) in umfänglicher Richtung elastisch komprimierbar ist, wodurch eine axiale Einsetzkraft zur Vormontage des weiblichen Kupplungselements (10) in der polygonalen Bauteilöffnung des ersten Bauteils (1) reduziert ist, und
d) bei einem Einsetzen eines männlichen Kupplungselements (40) mit einem Schaft (44) und einem Kugelkopf (42) der Schaft (44) des männlichen Kupplungselements (40) eine radial nach außen gerichtete Verformungsbewegung des weiblichen Kupplungselements (10) im Bereich der zueinander ausgerichteten ersten (22) und der zweiten Vorsprünge (26) bewirkt.

2. Das weibliche Kupplungselement (10) gemäß Patentanspruch 1, wobei die Anlagestruktur (16) und/oder die Haltestruktur (20) drei, vier, fünf oder sechs Ecken aufweist, die insbesondere abgerundet sind.

3. Das weibliche Kupplungselement (10) gemäß einem der vorhergehenden Patentansprüche, wobei die ersten Vorsprünge (22) vorzugsweise in jeder Ecke der polygonalen Form oder an jeder Seitenfläche der polygonalen Form vorgesehen sind.

4. Das weibliche Kupplungselement (10) gemäß Patentanspruch 3, wobei
a) jedem ersten Vorsprung (22) ein zweiter Vorsprung (26) zugeordnet ist oder
b) jedem an einer Seitenfläche angeordneten ersten Vorsprung (22) ist ein zweiter Vorsprung (26) im Inneren zugeordnet.

5. Das weibliche Kupplungselement (10) gemäß einem der vorhergehenden Patentansprüche, wobei jeder zweite Vorsprung (26) eine Einführschräge (30) aufweist, die einen Winkel (α) mit der zentralen Längsachse (L) des Kupplungselements (10) zwischen 10° und 40° einschließt.

6. Das weibliche Kupplungselement (10) gemäß einem der vorhergehenden Patentansprüche, wobei, wenn zwei erste Vorsprünge (22) an gegenüberliegend Ecken angeordnet sind, für ein Verhältnis einer Außendiagonalen D_{A} im Bereich der ersten Vorsprünge (22) zu einer Außendiagonalen D_{W} im Bereich der Wand (18) gilt: 1,15 D_{W} ≤ D_{A} ≤ 1,2 D_{W}.

7. Das weibliche Kupplungselement (10) gemäß einem der vorhergehenden Patentansprüche, wobei das weibliche Kupplungselement (10) aus einem der folgenden Materialien oder einer Kombination davon gebildet ist: Polypropylen, Silikon und/oder EPDM.

8. Eine zweiteilige Steckkupplung mit einem weiblichen Kupplungselement (10) gemäß einem der vorhergehenden Patentansprüche sowie einem männlichen Kupplungselement (40) aufweisend einen Schaft (44) und einen Kugelkopf (42), die über eine dazwischen angeordnete Verjüngung (46) getrennt sind.

9. Die zweiteilige Steckkupplung gemäß Patentanspruch 8, wobei ein Außendurchmesser D_{S} des Schafts (44) gleich oder größer einem Außendurchmesser D_{K} des Kugelkopfs (42) ist, so dass gilt: D_{S} ≥ D_{K}.

10. Die zweiteilige Steckkupplung gemäß einem der Patentansprüche 8 oder 9, wobei für einen Außendurchmesser D_{S} des Schafts (44) bezogen auf eine Innendiagonale d_{I} im Bereich von zwei zweiten Vorsprüngen (26), die einander gegenüber angeordnet sind, gilt: 1,1 d_{I} ≤ D_{S} ≤ 1,26 d_{I}.

11. Ein erstes Bauteil (1) mit einer polygonalen Bauteilöffnung, in der ein weibliches Kupplungselement (10) gemäß einem der Patentansprüche 1 bis 7 vormontiert ist.

12. Das erste Bauteil (1) gemäß Patentanspruch 11, wobei für eine Innendiagonale d_{B} der Bauteilöffnung bezogen auf eine Außendiagonale D_{W} der Wand (18) gilt: 1,09 D_{W} ≤ d_{B} ≤ 1,11 D_{W}

13. Eine Bauteilstruktur bestehend aus dem ersten Bauteil (1) gemäß Patentanspruch 11 sowie einem zweiten Bauteil (3) mit männlichem Kupplungselement (40) aufweisend einen Schaft (44) und einen Kugelkopf (42), die über eine dazwischen angeordnete Verjüngung (46) getrennt sind, wobei der Kugelkopf (42) zumindest teilweise in der kugelpfannenartigen Aufnahme (32) angeordnet ist.

14. Die Bauteilstruktur gemäß Patentanspruch 13, wobei bei einer zentralen Anordnung des weiblichen Kupplungselements (10) in der Bauteilöffnung des ersten Bauteils (1) für den Außendurchmesser D_{S} des Schafts (44) bezogen auf einen Spalt b, der zwischen der Wand (18) des weiblichen Kupplungselements (10) im Bereich der ersten Vorsprünge (22) und der Bauteilöffnung in einem nicht montierten Zustand des männlichen Kupplungselements (40) vorhanden ist, gilt: 11 b ≤ D_{S} ≤ 15,6 b.

15. Ein Verbindungsverfahren eines ersten Bauteils (1) mit einer polygonalen Bauteilöffnung mit einem zweiten Bauteil (3) mittels einer zweiteiligen Steckkupplung gemäß einem der Patentansprüche 8 bis 10 umfassend die folgenden Schritte:
a1) Bereitstellen des weiblichen Kupplungselements (10) und Einführen des weiblichen Kupplungselements (10) in die polygonale Bauteilöffnung des ersten Bauteils (1) oder
a2) Bereitstellen des ersten Bauteils (1) mit darin vormontiertem weiblichen Kupplungselement (10),
b) Bereitstellen eines zweiten Bauteils (3) mit männlichem Kupplungselement (40) aufweisend einen Schaft (44) und einen Kugelkopf (42), die über eine dazwischen angeordnete Verjüngung (46) getrennt sind,
c) Einführen des Kugelkopfs (42) in das weibliche Kupplungselement (10), bis der Kugelkopf (42) zumindest teilweise in einer kugelpfannenartigen Aufnahme (32) angeordnet ist, wobei der Schaft (44) eine radial nach außen gerichtete Verformungsbewegung des weiblichen Kupplungselements (10) im Bereich der ersten (22) und der zweiten Vorsprünge (26) bewirkt.

## Claims

1. A female coupling element (10) of a two-part plug-in coupling for releasably connecting a first component (1) with polygonal component opening and a second component (3), wherein the female coupling element (10) comprises the following features:
a) a polygonal, outer, flange-like attachment structure (16) extending in circumferential direction at an open, first axial end (12) as well as a dome-like retaining structure (20) with a polygonal outside having in circumferential direction, a number of outwardly directed first protrusions (22) and recesses (24) being alternately arranged, wherein the retaining structure (20) is axially spaced from the attachment structure (16) by means of a wall (18) extending in a longitudinal direction of the coupling element (10) and circumferentially as well as
b) inside of the female coupling element (10) adjacent to the open first axial end (12), in circumferential direction a plurality of inwardly directed second protrusions (26) and recesses (28) being alternately arranged, wherein with respect to a central longitudinal axis (L) of the female coupling element (10), the second protrusions (26) are aligned to the first protrusions (22), and the second protrusions (26) comprise an axial extension of a kind that the wall (18) in the portion of the second protrusions (26) is thicker in comparison with the portion at the second recesses (28), so that
c) when inserting the female coupling element (10) into the polygonal component opening, a material of the female coupling element (10) is elastically compressible in circumferential direction in the portion of the first (24) and the second recesses (28), so that an axial insertion force for preassembling the female coupling element (10) in the polygonal component opening of the first component (1) is reduced, and
d) when inserting a male coupling element (40) with a shaft (44) and a spherical head (42), the shaft (44) of the male coupling element (40) causes a radially outwards directed deformation movement of the female coupling element (10) in the portion of the first (22) and second protrusions (26), which are aligned to one another.

2. The female coupling element (10) according to claim 1, wherein the attachment structure (16) and/or the retaining structure (20) comprises three, four, five or six corners, which in particular are rounded.

3. The female coupling element (10) according to one of the preceding claims, wherein the first protrusions (22) are preferably provided in each corner of the polygonal form or on each lateral face of the polygonal form.

4. The female coupling element (10) according to claim 3, wherein
a) each first protrusion (22) is attributed to a second protrusion (26) or
b) each first protrusion (22) arranged on a lateral surface is attributed to a second protrusion (26) on the inside.

5. The female coupling element (10) according to one of the preceding claims, wherein every other protrusion comprises an insertion slope (30) enclosing an angle (α) with the central longitudinal axis (L) of the coupling element (10) between 10° and 40°.

6. The female coupling element (10) according to one of the preceding claims, wherein when two first protrusions (22) are arranged on opposite corners, a relation of an outer diagonal D_{A} in the portion of the first protrusions (22) to an outer diagonal D_{W} in the portion of the wall (18) is 1.15 D_{W} ≤ D_{A} ≤ 1.2 D_{W}.

7. The female coupling element (10) according to one of the preceding claims, wherein the female coupling element (10) is made of one of the following materials or a combination of them: polypropylene, silicone and/or EPDM.

8. A two-part plug-in coupling with a female coupling element (10) according to one of the preceding claims, as well as a male coupling element (40) having a shaft (44) and a spherical head (42), which are separated by means of a tapering (46) arranged there between.

9. The two-part plug-in coupling according to claim 8, wherein an outer diameter D_{S} of the shaft (44) is the same or larger than an outer diameter D_{K} of the spherical head (42), so that the following applies: D_{S} ≥ D_{K}.

10. The two-part plug-in coupling according to one of the claims 8 or 9 wherein the following applies to an outer diameter D_{S} of the shaft (44) with respect to an inner diagonal d_{I} in the portion of two second protrusions (26) which are arranged opposite one another: 1.1 d_{I} ≤ D_{S} ≤ 1.26 d_{I}.

11. A first component (1) comprising a polygonal component opening in which a female coupling element (10) according to one of the claims 1 to 7 is preassembled.

12. The first component (1) according to claim 11, wherein the following applies to an inner diagonal d_{B} of the component opening with respect to an outer diagonal D_{W} of the wall (18): 1.09 D_{W} ≤ d_{B} ≤ 1.11 D_{W}.

13. A component structure made of the first component (1) according to claim 11 as well as a second component (3) with male coupling element (40) having a shaft (44) and a spherical head (42), which are separated by means of a tapering (46) arranged in between, wherein the spherical head (42) is arranged at least partly in the spherical socket like receptable (32).

14. The component structure according to claim 13, wherein in case of a central arrangement of the female coupling element (10) in the component opening of the first component (1), the following applies to the outer diameter D_{S} of the shaft (44) with respect to a gap b, which is present between the wall (18) of the female coupling element (10) in the portion of the first protrusions (22) and the component opening in a non-assembled state of the male coupling element (40): 11 b ≤ D_{S} ≤ 15.6 b.

15. A connecting method of a first component (1) with a polygonal component opening with a second component (3) by means of a two-part plug-in coupling according to one of the claims 8 to 10, comprising the following steps:
a1) providing the female coupling element (10) and inserting the female coupling element (10) into the polygonal component opening of the first component (1) or
a2) providing the first component (1) with female coupling element (10) pre-assembled in there,
b) providing a second component (3) with male coupling element (40) having a shaft (44) and a spherical head (42) which are separated by means of a tapering (46) arranged in between,
c) inserting the spherical head (42) into the female coupling element (10) until the spherical head (42) is arranged at least partly in a spherical socket like receptable (32), wherein the shaft (44) causes a radially outwards directed deformation movement of the female coupling element (10) in the portion of the first (22) and the second protrusions (26).

## Revendications

1. Élément de couplage femelle (10) d'un raccord enfichable en deux parties, destiné à raccorder de façon amovible un premier composant (1) présentant une ouverture de composant polygonale et un deuxième composant (3), l'élément de couplage femelle (10) comportant les caractéristiques suivantes :
a) une structure d'appui (16) extérieure polygonale en forme de bride s'étendant dans la direction circonférentielle, à une première extrémité axiale ouverte (12), ainsi qu'une structure de maintien (20) en forme de dôme présentant une face extérieure polygonale, laquelle présente plusieurs premières saillies (22) et cavités (24) dirigées vers l'extérieur dans la direction circonférentielle, lesquelles sont disposées en alternance, la structure de maintien (20) étant espacée axialement de la structure d'appui (16) par une paroi (18) s'étendant circonférentiellement et dans une direction longitudinale de l'élément de couplage (10), et
b) à l'intérieur de l'élément de couplage femelle (10), à proximité de la première extrémité axiale ouverte (12), plusieurs deuxièmes saillies (26) et cavités (28) dirigées vers l'intérieur, disposées en alternance dans la direction circonférentielle, les deuxièmes saillies (26) étant alignées avec les premières saillies (22) par rapport à un axe longitudinal central (L) de l'élément de couplage femelle (10), et les deuxièmes saillies (26) présentant une extension axiale telle que la paroi (18) est plus épaisse dans la région des deuxièmes saillies (26) que dans la région située au niveau des deuxièmes cavités (28), de sorte que
c) lors d'une insertion de l'élément de couplage femelle (10) dans l'ouverture de composant polygonale, un matériau de l'élément de couplage femelle (10) dans la région des premières (24) et des deuxièmes cavités (28) peut être comprimé élastiquement dans la direction circonférentielle, réduisant ainsi une force d'insertion axiale nécessaire au prémontage de l'élément de couplage femelle (10) dans l'ouverture de composant polygonale du premier composant (1), et
d) lors d'une insertion d'un élément de couplage mâle (40) doté d'une tige (44) et d'une tête sphérique (42), la tige (44) de l'élément de couplage mâle (40) provoque un mouvement de déformation dirigé radialement vers l'extérieur de l'élément de couplage femelle (10) dans la région des premières (22) et des deuxièmes saillies (26) alignées les unes avec les autres.

2. Élément de couplage femelle (10) selon la revendication 1, dans lequel la structure d'appui (16) et/ou la structure de maintien (20) présentent trois, quatre, cinq ou six coins, lesquels sont en particulier arrondis.

3. Élément de couplage femelle (10) selon l'une des revendications précédentes, dans lequel les premières saillies (22) sont prévues de préférence dans chaque coin de la forme polygonale ou sur chaque surface latérale de la forme polygonale.

4. Élément de couplage femelle (10) selon la revendication 3, dans lequel
a) une deuxième saillie (26) est associée à chaque première saillie (22) ou
b) une deuxième saillie (26) est associée intérieurement à chaque première saillie (22) disposée sur une surface latérale.

5. Élément de couplage femelle (10) selon l'une des revendications précédentes, dans lequel chaque deuxième saillie (26) présente un chanfrein d'insertion (30) formant un angle (α) compris entre 10° et 40° avec l'axe longitudinal central (L) de l'élément de couplage (10).

6. Élément de couplage femelle (10) selon l'une des revendications précédentes, dans lequel, lorsque deux premières saillies (22) sont disposées au niveau de coins opposés, un rapport entre une diagonale extérieure D_{A} dans la région des premières saillies (22) et une diagonale extérieure D_{W} dans la région de la paroi (18) satisfait : 1,15 D_{W} ≤ D_{A} ≤ 1,2 D_{W}.

7. Élément de couplage femelle (10) selon l'une des revendications précédentes, dans lequel l'élément de couplage femelle (10) est constitué de l'un des matériaux suivants ou d'une combinaison de ceux-ci : polypropylène, silicone et/ou EPDM.

8. Raccord enfichable en deux parties, comprenant un élément de couplage femelle (10) selon l'une des revendications précédentes ainsi qu'un élément de couplage mâle (40) présentant une tige (44) et une tête sphérique (42), lesquelles sont séparées par un rétrécissement (46) disposé entre celles-ci.

9. Raccord enfichable en deux parties selon la revendication 8, dans lequel un diamètre extérieur D_{S} de la tige (44) est égal ou supérieur à un diamètre extérieur D_{K} de la tête sphérique (42), de sorte que : D_{S} ≥ D_{K}.

10. Raccord enfichable en deux parties selon l'une des revendications 8 ou 9, dans lequel, pour un diamètre extérieur D_{S} de la tige (44) par rapport à une diagonale intérieure d_{I} dans la région de deux deuxièmes saillies (26) disposées en face à face, s'applique ; 1,1 d_{I} ≤ D_{S} ≤ 1,26 d_{I}.

11. Premier composant (1) comprenant une ouverture de composant polygonale, dans laquelle est prémonté un élément de couplage femelle (10) selon l'une des revendications 1 à 7.

12. Premier composant (1) selon la revendication 11, dans lequel, pour une diagonale intérieure d_{B} de l'ouverture de composant par rapport à une diagonale extérieure D_{W} de la paroi (18), s'applique : 1,09 D_{W} ≤ d_{B} ≤ 1,11 D_{W}.

13. Structure de composant constituée d'un premier composant (1) selon la revendication 11 et d'un deuxième composant (3) doté d'un élément de couplage mâle (40) présentant une tige (44) et une tête sphérique (42), lesquelles sont séparées par un rétrécissement (46) disposé entre celles-ci, la tête sphérique (42) étant disposée au moins partiellement dans le logement en forme de coussinet sphérique (32).

14. Structure de composant selon la revendication 13, dans laquelle, lors d'un agencement central de l'élément de couplage femelle (10) dans l'ouverture de composant du premier composant (1), pour le diamètre extérieur D_{S} de la tige (44) par rapport à une fente b présente entre la paroi (18) de l'élément de couplage femelle (10) dans la région des premières saillies (22) et l'ouverture de composant, dans un état non monté de l'élément de couplage mâle (40), s'applique : 11 b ≤ D_{S} ≤ 15,6 b.

15. Procédé de raccordement d'un premier composant (1) présentant une ouverture de composant polygonale à un deuxième composant (3) au moyen d'un raccord enfichable en deux parties selon l'une des revendications 8 à 10, comportant les étapes suivantes :
a1) mise à disposition de l'élément de couplage femelle (10) et insertion de l'élément de couplage femelle (10) dans l'ouverture de composant polygonale du premier composant (1) ou
a2) mise à disposition du premier composant (1) avec l'élément de couplage femelle (10) prémonté dans celui-ci,
b) mise à disposition d'un deuxième composant (3) doté d'un élément de couplage mâle (40) présentant une tige (44) et une tête sphérique (42), lesquelles sont séparées par un rétrécissement (46) disposé entre celles-ci,
c) insertion de la tête sphérique (42) dans l'élément de couplage femelle (10), jusqu'à ce que la tête sphérique (42) soit disposée au moins partiellement dans un logement en forme de coussinet sphérique (32), la tige (44) provoquant un mouvement de déformation dirigé radialement vers l'extérieur de l'élément de couplage femelle (10) dans la région des premières (22) et des deuxièmes saillies (26).
